# EUROPEAN PATENT APPLICATION

(11) **EP 1 874 066 A1**
(43) Date of publication of application: **02.01.2008**
(21) Application number: 07012474.8
(22) Date of filing: 26.06.2007
(51) Int. Cl.: H04Q 7/22

(54) **SMS delivery over a multimedia subsystem**

(30) Priority: 30.06.2006 US 482236
(71) Applicant: Nortel Networks Limited, St Laurent, Québec H4S 2A9 (CA)
(72) Inventor: Dany, Sylvain, Gatineau, Quebec J8T 6A6 (CA)
(74) Representative: Boyce, Conor

(57) **Abstract**

The present invention effectively delivers SMS messages that are originated or processed by circuit-switched subsystem to a mobile terminal via a multimedia subsystem. A service node, such as a network domain selection server (NeDS), will effectively register as a mobile switching center or like routing entity for the mobile terminal at a home location resource of the mobile terminal. Based on this registration, the home location resource will direct routing entities within the circuit-switched subsystem to send SMS messages intended for the mobile terminal to the NeDS. Upon receipt of a SMS message, the NeDS will extract the message content from the SMS message and create a session control protocol message including the message content from the SMS message. The session control protocol message is then sent toward the mobile terminal via the multimedia subsystem to effect delivery of the content of the SMS message to the mobile terminal.

## Description

### Field of the Invention

The present invention relates to short message service (SMS) message delivery, and in particular to delivering SMS messages over a multimedia subsystem.

### Background of the Invention

The short message service (SMS) is a service available to most digital mobile terminals to allow users to send and receive short messages, which are often referred to as text messages, between their respective mobile terminals. In addition to exchanging text messages, SMS may be used for voting, entering competitions, as well as ordering ring tones and wallpapers for the mobile terminals.

As SMS has evolved, SMS messaging has been extended to allow the exchange of text messages between mobile terminals and personal computers by providing an SMS interface between the Internet and an SMS server associated with a cellular-based circuit-switched subsystem, which supports the mobile terminals having SMS capability.

As mobile communications have evolved, packet-based multimedia subsystems are being developed to support voice communications in parallel with existing circuit-switched subsystems. Efforts are being made to interwork the multimedia subsystems and the circuit-switched subsystems to allow voice calls to be supported between the two subsystems. Unfortunately, these efforts have failed to take into consideration delivery of SMS messages. In particular, mobile terminals that are capable of supporting communications via multimedia subsystems and circuit-switched subsystems can only receive SMS messages via the circuit-switched subsystems. As such, even when the mobile terminal is supported by a multimedia subsystem, SMS messages cannot be delivered to the mobile terminal unless the mobile terminal is also served by a circuit-switched subsystem. If the mobile terminal is not served by a circuit-switched subsystem, the SMS messages cannot be delivered to the mobile terminal until the mobile terminal comes within range of a circuit-switched subsystem and registers with that circuit-switched subsystem.

Accordingly, there is a need for a technique to allow SMS messages to be delivered to a mobile terminal via a multimedia subsystem when a mobile terminal is supported only by the multimedia subsystem. There is a further need to allow the SMS messages to be delivered to the mobile terminal through the circuit-switched subsystem when the circuit-switched subsystem is available to the mobile terminal.

### Summary of the Invention

The present invention provides a technique for effectively delivering SMS messages that are originated or processed by a circuit-switched subsystem to a mobile terminal via a multimedia subsystem. Preferably, a service node, such as a network domain selection server (NeDS), will effectively register as a mobile switching center or like routing entity for the mobile terminal at a home location resource of the mobile terminal. Based on this registration, the home location resource will direct routing entities within the circuit-switched subsystem to send SMS messages intended for the mobile terminal to the NeDS. Upon receipt of a SMS message, the NeDS will extract the message content from the SMS message and create a session control protocol message including the message content from the SMS message. The session control protocol message is then sent toward the mobile terminal via the multimedia subsystem to effect delivery of the content of the SMS message to the mobile terminal.

Depending on the network configuration, desires of the service provider, or desires of the subscriber, effective delivery of SMS messages may be provided via the multimedia subsystem or circuit-switched subsystem, depending on whether the mobile terminal is currently being served by the multimedia subsystem, circuit-switched subsystem, or both. If the mobile terminal is served by both the multimedia subsystem and the circuit-switched subsystem, various criteria may be used to determine whether an SMS message should be delivered directly via the circuit-switched subsystem, or whether the SMS message should be delivered to the NeDS, which will send the session control protocol message with the message content to the mobile terminal via the multimedia subsystem. If the mobile terminal is only served by the multimedia subsystem, then delivery may be effected via the multimedia subsystem. If the mobile terminal is only served by the circuit-switched subsystem, then delivery may be effected via the circuit-switched subsystem.

The circuit-switched subsystem is generally a cellular-based network, wherein the multimedia subsystem is generally a packet-based subsystem where wireless access is provided via local wireless communication techniques, such as those employed by the IEEE's 802.11 wireless local area network (WLAN) standards, or the like.

### Brief Description of the Drawing Figures

The accompanying drawing figures incorporated in and forming a part of this specification illustrate several aspects of the invention, and together with the description serve to explain the principles of the invention.

FIGURE 1 is an SMS communication environment according to the prior art.

FIGURE 2 is a communication flow diagram illustrating SMS message delivery according to the prior art.

FIGURE 3 is a communication environment according to one embodiment of the present invention.

FIGURE 4 is a communication flow diagram according to one embodiment of the present invention.

FIGURE 5 is a block representation of a network domain selection (NeDS) server according to one embodiment of the present invention.

FIGURE 6 is a block representation of a call/session control function (CSCF) according to one embodiment of the present invention.

FIGURE 7 is a block representation of a mobile terminal according to one embodiment of the present invention.

### Detailed Description of the Preferred Embodiments

The present invention allows short message service (SMS) messages that are processed through a circuit-switched subsystem, to be delivered to a mobile terminal via a multimedia subsystem, such as the Internet Protocol (IP) Multimedia Subsystem (IMS). Prior to delving into the details of the present invention, an overview of a traditional circuit-switched subsystem is provided along with a communication flow for delivery of SMS messages between mobile terminals, which are supported by the circuit-switched subsystem.

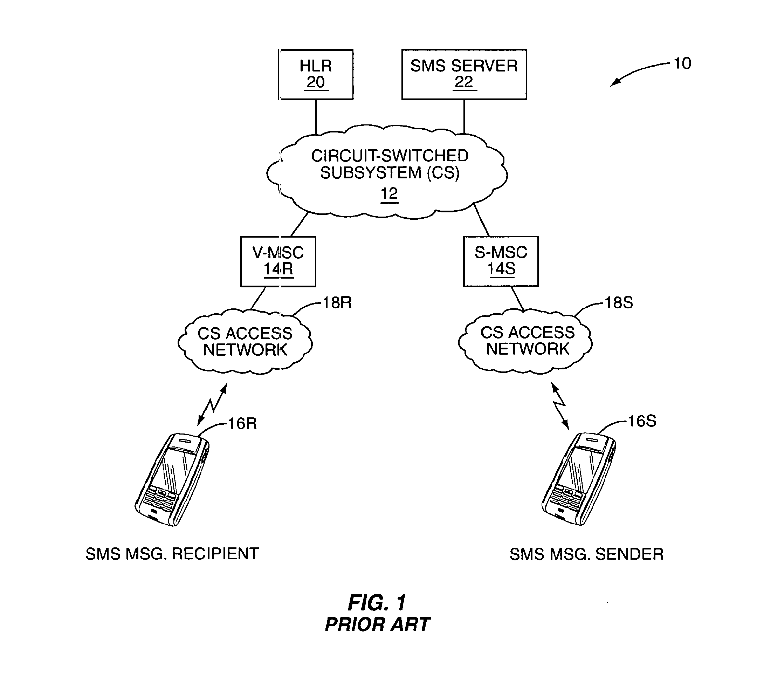

With reference to Figure 1, a communication environment 10 is provided according to the prior art, wherein SMS message delivery is supported by a circuit-switched subsystem (CS) 12. In operation, the CS 12 is depicted as having a visited mobile switching center (V-MSC) 14R, which supports a mobile terminal 16R of an SMS message recipient. The V-MSC 14R may communicate wirelessly with the mobile terminal 16R over an appropriate CS access network 18R, which may be a cellular network of base stations supporting wireless communications with the mobile terminal 16R. Similarly, the CS 12 may be associated with a serving mobile switching center (S-MSC) 14S, which supports a mobile terminal 16S of an SMS message sender. A CS access network 18S is associated with the S-MSC 14S and supports wireless communications with the mobile terminal 16S.

The CS 12 may also be associated with a home location resource (HLR) 20, as well as an SMS server 22. The HLR 20 maintains information regarding the location of the mobile terminal 16R, and in particular keeps track of the V-MSC 14R currently serving mobile terminal 16R. As such, network elements associated with the CS 12 may access the HLR 20 to determine where to route incoming calls and incoming SMS messages intended for the mobile terminal 16R.

The SMS server 22 is a network element that is typically associated with the CS 12 and is used to route SMS messages to their intended recipients. In particular, the SMS server 22 will store and forward SMS messages depending on the availability of the mobile terminal 16R associated with the SMS message recipient. Traditionally, the SMS server 22 can only forward SMS messages to the mobile terminal 16R associated with the SMS message recipient when the mobile terminal 16R is served by and registered with the CS 12.

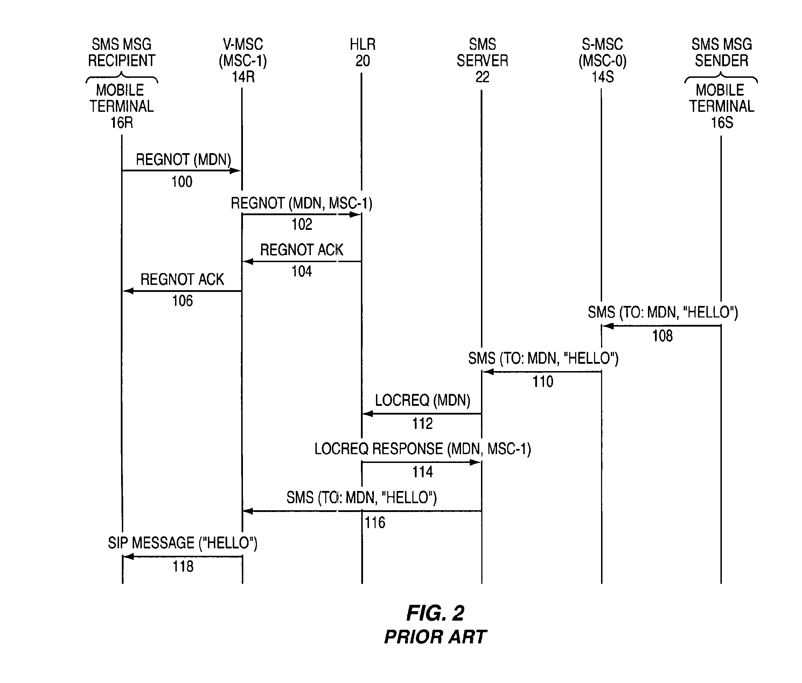

Turning to Figure 2, a communication flow is provided for delivery of an SMS message from mobile terminal 16S to mobile terminal 16R according to the prior art. As noted, a traditional SMS server 22 can only forward SMS messages intended for mobile terminal 16R when it is served by and registered with the CS 12. As such, the mobile terminal 16R associated with the SMS message recipient must be served by the CS 12 and must register with the CS 12. Assuming that mobile terminal 16R is being served by the V-MSC 14R, mobile terminal 16R may register with the CS 12 via the V-MSC 14R. Accordingly, mobile terminal 16R will send a Registration Notification (REGNOT) identifying the mobile directory number (MDN) of mobile terminal 16R to the V-MSC 14R (step 100). The V-MSC 14R is associated with an MSC identifier. In this example, the V-MSC 14R has an identifier of MSC-1. In response to receiving the REGNOT from mobile terminal 16R, the V-MSC 14R will send a REGNOT to the HLR 20 associated with mobile terminal 16R, identifying mobile terminal 16R using the MDN and the V-MSC 14R using the MSC-1 identifier (step 102). In response, the HLR 20 will store the necessary information to indicate that mobile terminal 16R is being served by V-MSC 14R. Once registered, the HLR 20 will send a REGNOT Acknowledgement (ACK) to the V-MSC 14R (step 104), which will forward the REGNOT ACK to mobile terminal 16R to confirm registration with the CS 12 (step 106).

Next, assume that mobile terminal 16S, which is associated with the SMS message sender, initiates an SMS message intended for mobile terminal 16R. Assume that the SMS message is a text message with the text, "Hello," and includes the MDN for mobile terminal 16R. the SMS message is initially sent to the S-MSC 14S (step 108), which forwards the SMS message to the SMS server 22 for processing (step 110). The SMS server 22 must locate mobile terminal 16R, and in particular, locate the V-MSC 14R currently serving mobile terminal 16R. To locate the V-MSC 14R, the SMS server 22 will send a location request (LOCREQ) identifying the MDN of mobile terminal 16R to the HLR 20 (step 112). The HLR 20 will use the MDN to identify the serving V-MSC 14R, and send a LOCREQ Response identifying the V-MSC 14R serving the mobile terminal 16R (step 114). The V-MSC 14R is identified using the MSC identifier MSC-1. Once the V-MSC 14R serving mobile terminal 16R is identified, the SMS server 22 will forward the SMS message to the V-MSC 14R (step 116). The V-MSC 14R will send the SMS message to mobile terminal 16R via the CS access network 18R (step 118).

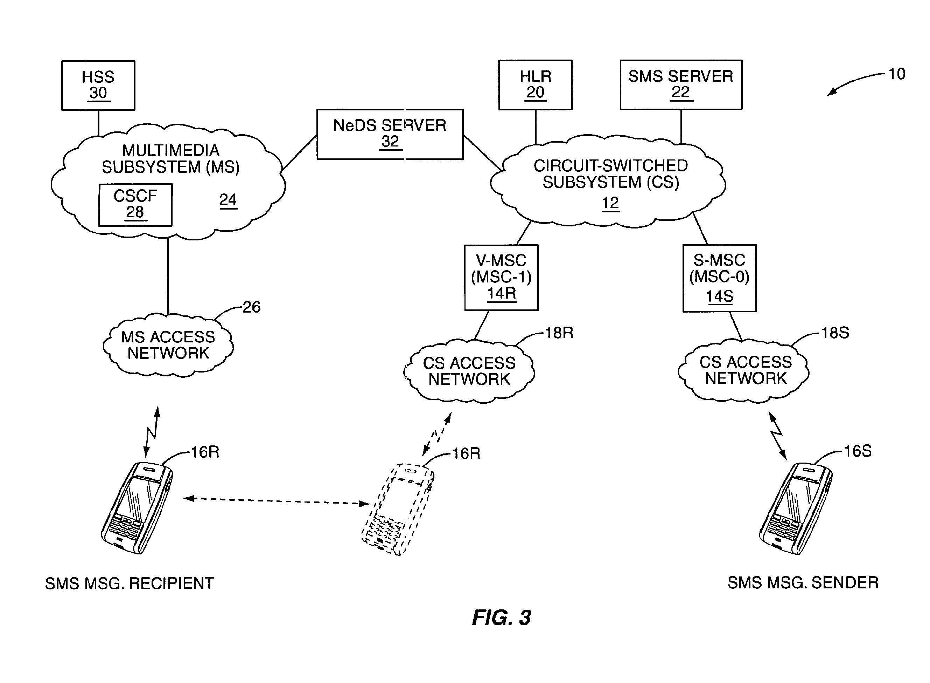

As indicated above, if mobile terminal 16R is not currently served by and registered with the CS 12, the SMS message cannot be delivered, even if mobile terminal 16R is being served by a multimedia subsystem in traditional communication environments. With reference to Figure 3, a communication environment 10 is illustrated according to one embodiment of the present invention, where the SMS message may be delivered to mobile terminal 16R through a multimedia subsystem (MS) 24. Although the SMS message may be delivered to mobile terminal 16R through the MS 24 when mobile terminal 16R is also being served by the CS 12, the present invention is particularly beneficial when an SMS message needs to be delivered to mobile terminal 16R when mobile terminal 16R is served only by the MS 24.

Wireless communications between the MS 24 and mobile terminal 16R are provided via an MS access network 26, which may be a network of one or more wireless access points, where each access point provides communications with mobile terminal 16R. In one embodiment, the wireless access points provide relatively local wireless communications, which have a more limited range than traditional cellular communications. Exemplary local wireless communication techniques may employ those set forth in the IEEE's 802.11 wireless local area network (WLAN) standards, the Bluetooth standard, and like wireless networking standards. The MS 24 may include one or more call/session control functions (CSCFs) 28 through which call signaling is routed and processed as necessary to establish sessions between respective endpoints. The CSCF 28 may also be employed to provide message delivery within the MS 24. The MS 24 will include a home subscriber server (HSS) 30, which is essentially a database of all subscriber and service data for mobile terminal 16R when served by the MS 24. The HSS 30 also provides the traditional HLR and authentication functions for MS subscribers. For further information on IP multimedia subsystems, CSCFs 28, the HSS 30, and other MS elements, reference is made to the Third Generation Partnership Project (3GPP) and its related standards, which define the IP multimedia subsystem and enabling architecture therefor.

Another function associated with the MS 24 is the network domain selection (NeDS) function. This function is the point in the MS 24 where the decision is made to deliver a call in the CS 12 or the MS 24. The NeDS function may be provided in a NeDS server 32, which may be any type of service node capable of interacting with the CSCF 28 or other call control function in the MS 24.

For the preferred embodiment of the present invention, the NeDS server 32 or like service node is used to emulate a visited location resource and/or a V-MSC of the CS 12. In operation, when mobile terminal 16R is served by the MS 24, the NeDS server 32 will register with the HLR 20 in a manner resulting in SMS messages intended for mobile terminal 16R being delivered to the NeDS server 32. Once an SMS message intended for mobile terminal 16R is received by the NeDS server 32, an appropriate session control protocol, such as the Session Initiation Protocol (SIP), may be used to deliver the content of the SMS message to mobile terminal 16R via the MS 24.

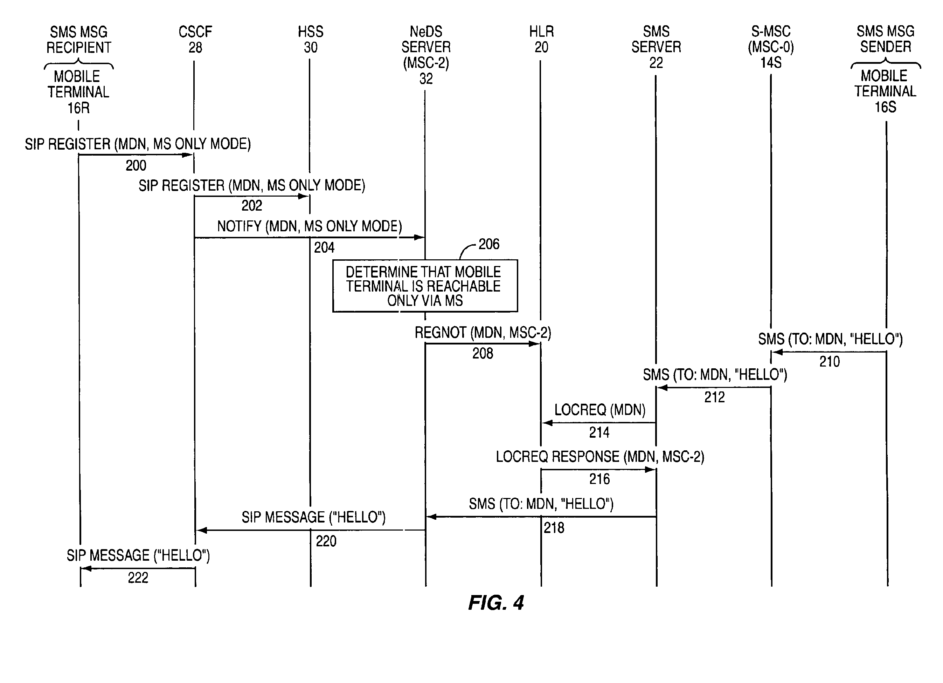

Turning now to Figure 4, a communication flow diagram is used to illustrate operation of one embodiment of the present invention. Assume that mobile terminal 16R may be supported by either the MS 24 or the CS 12, but is currently only being served by the MS 24. Notably, mobile terminal 16R is not being served by the CS 12 in the scenario shown in Figure 4. To register with the MS 24, mobile terminal 16R will send a SIP Register message to the appropriate CSCF 28 in the MS 24 (step 200). The SIP Register message will provide a mobile terminal identifier, such as the MDN, and may indicate that mobile terminal 16R is only being supported by the MS 24. As illustrated, the SIP Register message includes the appropriate MDN and indicates that the mobile terminal 16R is currently only operating in an MS mode. The CSCF 28 will send a SIP Register message to the HSS 30 to register mobile terminal 16R with the MS 24 (step 202). The CSCF 28 will also send a Notify message to the NeDS server 32 to effectively register the mobile terminal 16R with the NeDS server 32 (step 204). Again, the Notify message will include the mobile terminal identifier, such as the MDN, as well as indicate that mobile terminal 16R is only being served by the MS 24.

The NeDS server 32 will determine that mobile terminal 16R is reachable only via the MS 24 based on the information provided by the CSCF 28 (step 206). In response, the NeDS server 32 will send a registration notification (REGNOT) message to the HLR 20 (step 208). The REGNOT message will include the MDN for mobile terminal 16R and a mobile switching center identifier (MSC-2), which is associated with the NeDS server 32. Accordingly, the NeDS server 32 will appear to the HLR 20 and other elements in the CS 12 as a visited location register, a mobile switching center having an identifier of MSC-2, or a combination thereof, at least for SMS actions. At this point, the HLR 20 perceives the NeDS server 32 as the mobile switching center currently serving mobile terminal 16R, even though mobile terminal 16R is not served by a mobile switching center, but is instead served by the MS 24. When an SMS message is directed to mobile terminal 16R, the SMS message is routed to the NeDS server 32 using traditional SMS messaging techniques. The NeDS server 32 will send the content of SMS messages to mobile terminal 16R in an appropriate session control protocol message via the MS 24. As an example, assume an SMS message is initiated from mobile terminal 16S by the SMS message sender. The SMS message is intended for the MDN associated with mobile terminal 16R, and includes the text, "Hello." The SMS message is received from mobile terminal 16S by the S-MSC 14S (step 210), and forwarded to the SMS server 22 (step 212). In traditional fashion, the SMS server 22 will send a location request (LOCREQ) message with the MDN of mobile terminal 16R to the HLR 20 (step 214). The HLR 20 will use the MDN to identify the "mobile switching center" serving mobile terminal 16R. In this case, the "mobile switching center" is actually the NeDS server 32, which is associated with a mobile switching center identifier, MSC-2. The HLR 20 will respond by sending a LOCREQ Response providing a destination identifier, MSC-2, to the SMS server 22 (step 216). The SMS server 22 will send the SMS message to the NeDS server 32 using the destination address MSC-2 (step 218). The NeDS server 32 will repackage the content of the SMS message into a SIP message and send the SIP message to the CSCF 28 (step 220), which will forward the SIP message to mobile terminal 16R (step 222).

With the present invention, SMS messages can be delivered from the CS 12 to mobile terminals 16R through the MS 24, as well as through the CS 12 in traditional fashion. Delivery of an SMS message via the MS 24 may be based on the mobile terminal 16R being served and registered with the MS 24 and not being served by the CS 12. In other embodiments, preferences of the service provider or the subscriber may be used to determine how the SMS message is delivered when the mobile terminal 16R is served by both the MS 24 and the CS 12. For example, SMS messages may be delivered through the MS 24 only when the mobile terminal 16R is only served by the MS 24. In other embodiments, SMS messages may be delivered through the MS 24, even when the CS 12 is currently supporting the mobile terminal 16R. An initial implementation of the invention will likely default to delivering SMS messages via the CS 12 when such service is available, and will deliver the SMS messages through the MS 24 only when the MS 24 is serving the mobile terminal 16R and the CS 12 is not serving the mobile terminal 16R.

Notably, text messages may be originated from mobile terminal 16R via the MS 24 by sending an appropriate SIP message through the MS 24. The SIP message would be directed to the NeDS server 32, which would convert the message from a SIP message format to an SMS message format for delivery to the appropriate mobile switching center serving the intended recipient.

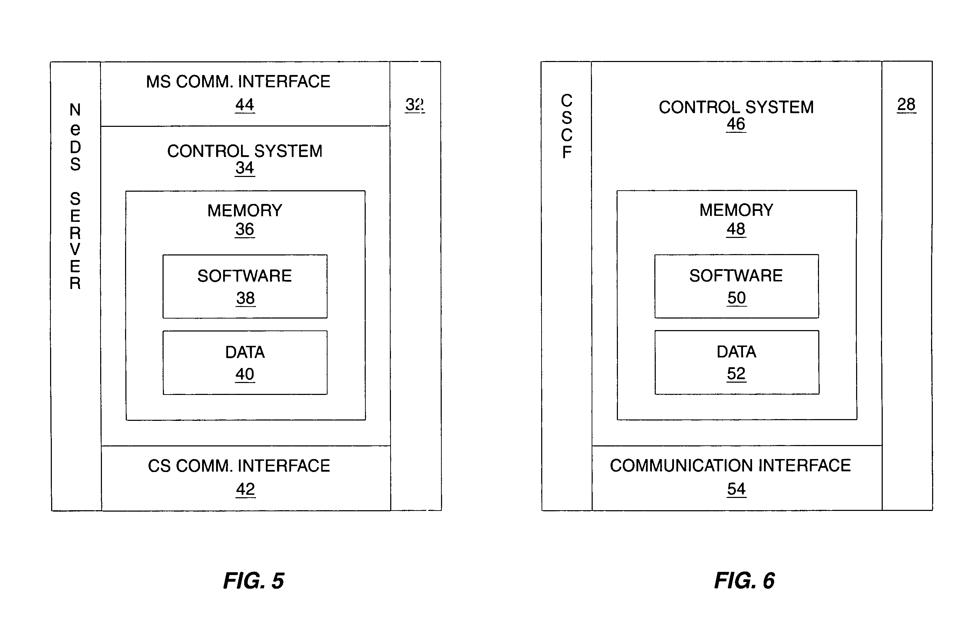

With reference to Figure 5, a block representation of a NeDS server 32 is illustrated. The NeDS server may be employed in any service node containing a control system 34 having sufficient memory 36 for the requisite software 38 and data 40 to operate as described above. The NeDS server 32 may have one or more communication interfaces, including a CS communication interface 42 for supporting communications with the CS 12, as well as an MS communication interface 44 for facilitating communications with the MS 24.

With reference to Figure 6, a block representation of a CSCF 28 is provided.

Notably, the functionality of the CSCF 28 may be employed in any type of service node having a control system 46 with memory 48 for the requisite software 50 and data 52 to operate as described above. The control system 46 may also be associated with a communication interface 54 to facilitate communications with various entities associated with the MS 24.

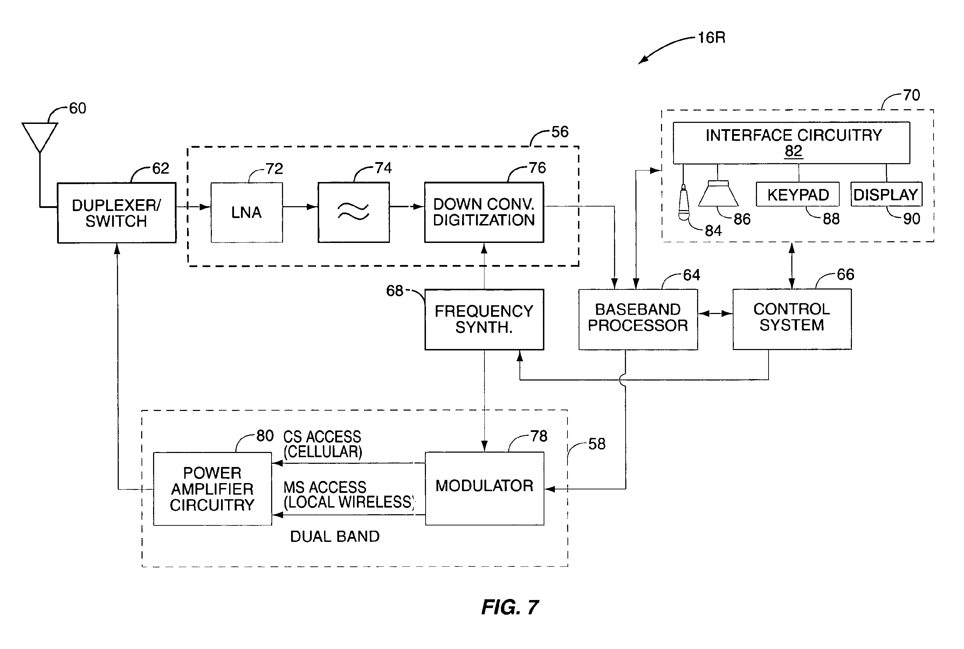

The basic architecture of the mobile terminal 16R is represented in Figure 7 and may include a receiver front end 56, a radio frequency transmitter section 58, an antenna 60, a duplexer or switch 62, a baseband processor 64, a control system 66, a frequency synthesizer 68, and an interface 70. The receiver front end 56 receives information bearing radio frequency signals from one or more remote transmitters provided by a base station. A low noise amplifier 72 amplifies the signal. A filter circuit 74 minimizes broadband interference in the received signal, while downconversion and digitization circuitry 76 downconverts the filtered, received signal to an intermediate or baseband frequency signal, which is then digitized into one or more digital streams. The receiver front end 56 typically uses one or more mixing frequencies generated by the frequency synthesizer 68. The baseband processor 64 processes the digitized received signal to extract the information or data bits conveyed in the received signal. This processing typically comprises demodulation, decoding, and error correction operations. As such, the baseband processor 64 is generally implemented in one or more digital signal processors (DSPs).

On the transmit side, the baseband processor 64 receives digitized data, which may represent voice, data, or control information, from the control system 66, which it encodes for transmission. The encoded data is output to the transmitter 58, where it is used by a modulator 78 to modulate a carrier signal that is at a desired transmit frequency. Power amplifier circuitry 80 amplifies the modulated carrier signal to a level appropriate for transmission, and delivers the amplified and modulated carrier signal to the antenna 60 through the duplexer or switch 62.

As noted above, the mobile terminal 16R may be able to communicate via cellular communications with the CS 12 or local wireless communications via the MS 24. Accordingly, the receiver front end 56, baseband processor 64, and radio frequency transmitter section 58 cooperate to provide either a cellular interface or local wireless interface. These functions may be implemented using redundant circuitry, or by configuring common circuitry to operate in different modes. The configuration of the mobile terminal 16R will be dictated by economics and designer choice. The mobile terminal 16R is configured such that if the local wireless interface is not functional, communications are switched to the cellular. Alternatively, the mobile terminal 16R could have both the local wireless interface and the cellular interface in operation at the same time and select one of the two for communication at any given time based on signal quality or other factors.

A user may interact with the mobile terminal 16R via the interface 70, which may include interface circuitry 82 associated with a microphone 84, a speaker 86, a keypad 88, and a display 90. The interface circuitry 82 typically includes analog-to-digital converters, digital-to-analog converters, amplifiers, and the like. Additionally, it may include a voice encoder/decoder, in which case it may communicate directly with the baseband processor 64. The microphone 84 will typically convert audio input, such as the user's voice, into an electrical signal, which is then digitized and passed directly or indirectly to the baseband processor 64. Audio information encoded in the received signal is recovered by the baseband processor 64, and converted by the interface circuitry 82 into an analog signal suitable for driving the speaker 86. The keypad 88 and display 90 enable the user to interact with the mobile terminal 16R, input numbers to be dialed, address book information, or the like, as well as monitor call progress information. For SMS related messages, the mobile terminal 16R is able to receive SMS messages via the cellular interface and SIP or like messages from the local wireless interface and present the text of either message to the user via the interface 70 as a text message. The mobile terminal 16R will also support sending SMS messages via the cellular interface and SIP or like messages from the local wireless interface to initiate or respond to text messaging sessions.

## Claims

1. A method for delivering short message service messages via a multimedia subsystem from a circuit-switched subsystem comprising:
• registering as a routing node for a mobile terminal at a home location resource of the mobile terminal in the circuit-switched subsystem, such that short message service messages processed in the circuit-switched subsystem and intended for the mobile terminal are sent to the routing node;
• receiving a short message service message intended for the mobile terminal via the circuit-switched subsystem, the short message service message having message content;
• creating a session control protocol message including the message content; and
• sending the session control protocol message toward the mobile terminal via the multimedia subsystem.

2. A system for delivering short message service messages via a multimedia subsystem from a circuit-switched subsystem comprising:
• at least one communication interface; and
• a control system associated with the at least one communication interface and adapted to:
• register as a routing node for a mobile terminal at a home location resource of the mobile terminal in the circuit-switched subsystem, such that short message service messages processed in the circuit-switched subsystem and intended for the mobile terminal are sent to the routing node;
• receive a short message service message intended for the mobile terminal via the circuit-switched subsystem, the short message service message having message content;
• create a session control protocol message including the message content; and
• send the session control protocol message toward the mobile terminal via the multimedia subsystem.

3. The system of claim 2 wherein the control system is further adapted to determine the mobile terminal is served by the multimedia subsystem and register as the routing node for the mobile terminal at the home location resource upon determining the mobile terminal is served by the multimedia subsystem.

4. The system of claim 2 wherein the control system is further adapted to determine the mobile terminal is not served by the circuit-switched subsystem and register as the routing node for the mobile terminal at the home location resource upon determining the mobile terminal is not served by the circuit-switched subsystem.

5. The system of claim 2 wherein the short message service message is received from a short message service server of the circuit-switched subsystem.

6. The system of claim 2 wherein the session control protocol message is sent toward a call/session control function in the multimedia subsystem for delivery to mobile terminal.

7. The system of claim 2 wherein the control system is further adapted to receive a registration message indicating the mobile terminal is being served by the multimedia subsystem and register as the routing node for the mobile terminal at the home location resource upon receiving the registration message.

8. The system of claim 7 wherein the registration message is configured to indicate that the short message service messages intended for the mobile terminal should be delivered via the multimedia subsystem as session control protocol messages.

9. The system of claim 2 wherein the mobile terminal is adapted to provide local wireless communication to communicate with the multimedia subsystem and cellular communications to communicate with the circuit-switched subsystem.

10. The system of claim 2 wherein the short message service messages are sent directly via the circuit-switched subsystem to the mobile terminal when the mobile terminal is served by the circuit-switched subsystem.

11. The system of claim 2 wherein session control protocol messages corresponding to the short message service messages are sent directly via the multimedia subsystem when the mobile terminal is served by the multimedia subsystem.

12. The system of claim 2 wherein session control protocol messages corresponding to the short message service messages are sent directly via the multimedia subsystem when the mobile terminal is served by the multimedia subsystem and not served by the circuit-switched subsystem.

13. The system of claim 2 wherein the routing node either represents a mobile switching center or appears as a mobile switching center to the circuit-switched subsystem.
